# EUROPEAN PATENT APPLICATION

(11) **EP 4 390 118 A1**
(43) Date of publication of application: **26.06.2024**
(21) Application number: 22215952.7
(22) Date of filing: 22.12.2022
(51) Int. Cl.: F03D 13/40, F03D 13/10

(54) **RACK FOR PREFORM AND/OR PRECAST ELEMENT MANUFACTURING, MANUFACTURING SYSTEM AND WINCH ASSISTANCE DEVICE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Rack (15, 15', 15'') as a transport and/or storage device for preform element (54) and/or precast element manufacturing, in particular for a wind turbine blade, the rack (15, 15', 15") comprising a longitudinal frame structure (16), to which lateral support elements (21) are mounted, which each comprise a support portion (23) and which form multiple support assemblies (24) for multiple longitudinal items (44, 44', 44" ) to store and transport horizontally in the frame structure (16), wherein the items (44, 44', 44'') have a horizontal manufacturing process orientation for use in the manufacturing process,
wherein the support assemblies (24) comprise,
- for support portions (23) of support elements (21) mounted opposingly in width direction (4), width adjustment means for adjusting the distance of support portions (23) of the support assemblies (24) in a width direction to different widths of the items (44, 44', 44''), and/or,
- for support portions (23) spanning the frame structure (16) in the width direction (4) by having their support element (21) mounted to the frame structure (16) at opposing positions in the width direction (4), comprise shape adjustment means for adjusting to different height profiles of supported items (44, 44', 44'') in the width direction (4).

## Description

The invention concerns a rack as a transport and/or storage device for preform and/or precast element manufacturing, in particular for a wind turbine blade, the rack comprising a longitudinal frame structure, to which lateral support elements are mounted, which each comprise a support portion and which form multiple support assemblies for multiple longitudinal items to store and transport horizontally in the frame structure, wherein the items have a horizontal manufacturing process orientation for use in the manufacturing process. Further, the invention concerns a manufacturing system and a winch assistance device.

Wind turbines usually comprise a rotor having multiple wind turbine blades. For example, such a wind turbine may convert the mechanical energy of the wind into electrical energy. Since large-scale energy production is sought, the wind turbines and, accordingly, the wind turbine blades have an enormous size, such that their manufacturing is a major challenge for manufacturers of wind turbines. While, for a long time, wind turbine blades have been fabricated from fiber-reinforced material involving the handling of large parts like fiber mats by casting the shell of the wind turbine blade, technologies have been proposed to facilitate manufacturing of wind turbine blades.

For example, it has been proposed to use preform elements, or preforms, respectively. Such preform elements are preformed smaller parts or segments of the wind turbine blade, which are used for building the respective wind turbine blade shell. The preform elements are prefabricated separately and then arranged and aligned in a blade mold according to the requested geometry of the wind turbine blade to be manufactured. The preform elements may be arranged in the blade mold for casting an entire wind turbine blade or a large wind turbine blade part.

The preform elements may comprise one or more components, for example one or more textile layers, wherein the components are at least locally attached to each other by using a binding agent/adhesive agent. Components of preform elements may, for example, comprise a plurality of fiber mats and/or core materials, which are locally attached to each other to allow for their mutual handling. This facilitates the arrangement of the components in the blade mold. Preform elements may be understood as semi-solid elements. In particular, textile components of the preform elements, for example fiber mats, may consist of glass fibers, carbon fibers, or aramid fibers. These layers remain unaffected by the binding agent, such that they can be filled later on with a resin during the manufacturing of the rotor blade. Core material may, for example, comprise balsa wood, foam and the like. Using preform elements in particular allows to reduce the cycle time for production of wind turbine blades.

In another approach, it has also been proposed to use precast elements, that is, parts of a wind turbine blade or wind turbine blade segments which already comprise cured resin and can also be used for building the wind turbine blade.

Preform elements may, for example, be fabricated in a manufacturing assembly, which may also comprise a preform mold as a packing station. Such a preform mold usually comprises a mold element, for example a mold shell, which comprises a molding surface shaped according to the desired shape of the preform element, whereon the components are placed to assume the corresponding shape. Preferably, the preform elements are covered in a vacuum bag to stabilize the stack of components that constitutes the preform element. Manufacturing and providing the preform element for use in the blade mold may comprise additional steps, for example heat or cold treatment, in particular for activating and hardening the binding agent, and unpacking, that is, removal of the vacuum foil or bag, respectively. Hence, handling of the preform elements may comprise transport and storing of the preform elements.

In modern wind turbines, wind turbine blades of different geometries, in particular sizes, are employed. Hence, if different types/sizes of wind turbine blades are to be manufactured, the size of the preform elements varies in accordance with the blade dimensions they are intended to be used for. In particular, preform elements primarily vary in height and width, wherein, in addition, even in a certain type of wind turbine blade, different shapes may occur.

However, manufacturing systems for preform elements, in particular the preform molds and the transport and/or storage devices, in particular racks, today are mostly designed for a certain preform element size and/or shape. In particular, preform elements of a given size and shape are manufactured in dedicated manufacturing assemblies for preform elements. This, however, is not a viable approach for mass production, since a very large number of manufacturing assemblies, racks and the like would be required as well as, in many cases, lifting and/or transport tools. Even if flexible configurations of work stations may be taken into account, additional items in varying sizes to be transported and/or stored result.

Post-published European patent application EP 22174530.0 discloses a rack for transporting and/or storing building elements which are used for building rotor blades of a wind turbine. Several arms are mounted to a holding structure and can be pivoted into a longitudinal direction in a non-holding state. The arms may be adjustable in their lengths and heights and/or may be exchangeable. Since, however, they are only attached at one side, all the load of items supported by the arms is taken up on one lateral side.

Like problems arise for the manufacturing of precasts.

It is an object of the current invention to provide an improved manufacturing setup allowing flexible transport and storage of a variety of preform elements, precast elements, and other manufacture-related items, in particular of different size and/or shape.

This object is achieved by providing a rack according to claim 1, a manufacturing system according to claim 14, and a winch assistance device according to claim 15. Advantageous embodiments are described by the dependent claims.

A rack for use as a transport and/or storage device in a manufacturing system for preform and/or precast element manufacturing, in particular for a wind turbine blade, according to the invention comprises a longitudinal frame structure, to which lateral support elements are mounted, which each comprise a support portion and which form multiple support assemblies for multiple longitudinal items to store and transport horizontally in the frame structure, wherein the items have a horizontal manufacturing process orientation for use in the manufacturing process. Herein, the support assemblies comprise,
- for support portions of support elements mounted opposingly in width direction, width adjustment means for adjusting the distance of support portions, which are mounted to the frame structure opposingly in width direction, of the support assemblies in a width direction to different widths of the items, and/or,
- for support portions spanning the frame structure in the width direction by having their support element mounted to the frame structure at opposing positions in the width direction, comprise shape adjustment means for adjusting to different height profiles of supported items in the width direction.

A longitudinal item has a length, which is larger than its width, and a height, which is smaller than its width, and thus has a main plane of extension, namely the length-width-plane. To transport, store or work on/with an item horizontally means that the length-width-plane is, at least essentially, the horizontal plane. Items to be transported and/or stored are used in the horizontal orientation in the manufacturing process. To be able to transport them horizontally, that is, in the manufacturing process orientation, facilitates transfer between work stations, transport positions and storage locations.

According to the invention, the items are used in different shapes and/or sizes in the manufacturing process, on particular at least items of different width and/or a different height profile in the width direction, i.e. different shape, are used. Since the width adjustment means and/or shape adjustment means are provided in the rack according to the invention, the rack can be used for items of different width and/or shape, being flexible and applicable over a wide range. Here, the support portions preferably support the items at least in lateral edge regions, in particular at flanges. Since they are mounted to the frame structure at laterally opposing sides, stable and robust support is provided. The lateral sides of the frame structures thus both bear part of the load of the items, providing high stability and robustness in a construction, which can be easily implemented and is cost-efficient.

Two support portions of, in width direction, opposingly mounted support elements may form a pair of support portions, which preferably support lateral edge regions, for example flanges, of the items. Their distance in the width direction may be adjusted by the width adjustment means to match the width of the item to be transported and/or stored in the respective support assembly.

On the other hand, at least a part of the support elements and, hence, at least essentially also their support portions, may span the whole width of the frame structure by being mounted at both lateral sides to the frame structure. Here, the item may be of any width smaller than or equal to the width spanned by the support portion. In such a case, the shape adjustment means, which may comprise a configuration of the support portion, may provide adaptability to different shapes. This adjustment preferably takes place automatically when placing an item on the support portion, according to the properties of the support portion.

Of course, both the width adjustment means and the shape adjustment means may be implemented in one embodiment of the invention, for example by providing both configurations of the support portions. In an embodiment, the configurations may be provided alternatingly in the longitudinal direction.

The support assemblies can be understood as each providing a transport and/or storage space for one of the items, wherein the storage spaces are staggered in the height direction. Each of these transport and/or storage spaces may accommodate an item of different width and/or shape due to the provided adjustment means. While, in principle, the height positions of the support elements may be predefined and fixed, such that also the transport and/or storage spaces are fixed, in preferred embodiments, as further discussed below, the support elements may be height-adjustable.

While item may, in particular, be building elements, that is preform elements and/or precast elements, which, as already discussed, come in different sizes and/or shapes, another important group of items to be stored and/or transported can comprise mold elements, for example mold shells. In other words, the items may be chosen from the group comprising mold elements, preform elements and precast elements.

Regarding mold elements, a manufacturing assembly in a manufacturing system may be conceivable, which can flexibly be configured to manufacture preform elements and/or precast elements of different size and/or shape, in particular different widths, at the same work station. For example, such a manufacturing assembly may comprise an adjustable mold element support device, on which mold elements, in particular mold shells, of different sizes and/or shapes can be supported after respective adjustment of the mold element support device. Here, a mold element, in particular a mold shell, is a stiff, shape-keeping element having a molding surface shaped according to the desired shape of the preform element and/or precast element, whereon, during manufacturing, the components are put to assume the corresponding shape. By adding a mold element, the mold element support device with the mold element supported thereon provides a preform mold as a work station, which may also be called packing station.

It may hence be proposed to use a flexible mold element support device, which can be adapted for a plurality of different, longitudinal mold elements, in particular mold elements having a different shape and/or size. The mold element support may comprise adjustment devices to adjust support portions to the dimensions and height profile in the width direction of the mold element. In particular, such support portions of a mold element support device may be adjustable at least in height and/or width direction, preferably also in the longitudinal direction. Different concrete implementations are conceivable.

Hence, to adapt a work station, in particular a packing station, of a manufacturing assembly to the new size and/or shape of preform elements and/or precast elements to be manufactured, the previous mold element has to be removed, the mold element support device has to be adjusted to a new mold element, and the new mold element has to be installed. These actions require transport and storage of the mold elements, such that the rack of the present invention can also be used for these mold elements, which also come in different sizes and/or shapes.

Hence, generally speaking, a rack of high flexibility, in particular regarding the size and shape of items, is provided, in particular during wind turbine production for preform elements and/or precast elements as well as mold elements used to manufacture them. Here, preferably, the width adjustment means as well as the shape adjustment means may act locally/individually such that variations of shape and/or width along the length of the item can be accounted for. If, for example, due to special design features, which may, for example, be provided for lighting protection systems and the like, varying widths and/or shape occurs along the longitudinal direction, the width adjustment means and/or shape adjustment means of the respective support elements of the respective support assembly allow local adjustment to these variations. As already mentioned, in preferred embodiments, individual height adjustment may additionally be provided, such that also variations in height along the length of the item can be taken into account and adjusted for.

Hence, the rack can handle items with varying geometries. The rack and a manufacturing system having such a rack are not specific for a certain wind turbine blade, in particular a certain size/dimension of a wind turbine blade. Hence, the manufacturing system can be used to make and handle preform elements and/or precast elements for several different wind turbine blade types.

Racks according to the invention, preferably in addition to other manufacturing equipment of the manufacturing system, can also be reused or even, if a blade type is discontinued, recycled for use with another wind turbine blade type. Hence, in addition to easy construction and cost-efficiency, a quick transition to a new blade type manufacturing is possible. The process of handling items, in particular preform elements and/or precast elements, for wind turbine blades may be assimilated or even standardized for different types of wind turbine blades, making it easier for manufacturing personnel to switch between the production of different blade types. In particular, the manufacturing system may also be used for different types of wind turbine blade manufacturing. For example, the rack and the manufacturing system described herein may be used for integral blade manufacturing as well as blade half manufacturing. Finally, the rack and the manufacturing system can be used for both preform element and precast element manufacturing.

A rack according to the invention can, in particular, handle preform elements, for example concave preform elements, which may be packed in vacuum bags and/or vacuum foil. In particular, even stacks of more than one preform element and/or precast element may be handled. Regarding vacuum bags, different types and designs can be employed, for example like described in post-published European patent application EP 21209596.2.

In an especially preferred embodiment, each support element may comprise, as part of the width adjustment means, a swivel arm extending horizontally from the frame structure, in particular from a vertical beam of the frame structure, wherein the swivel arm is pivotally mounted to the frame structure at one end and carries the support portion at its other end. Each swivel arm carries one of the plurality of support portions. By being pivotable, the swivel arm allows to position the support portion along a part-circle in the horizontal plane, which is the afore-mentioned width-length-plane. Along the virtual circle described by the support portion during movement, different positions in the width direction, or lateral direction, are assumed. Hence, a position in the width direction corresponding to a lateral edge region, in particular a flange, of an item to be supported can be chosen in a simple manner. Since, in particular, for each support assembly and each longitudinal position or region, a pair of support elements can be provided, in particular mounted to opposing vertical beams of the frame structure, the distance in the width direction between the respective support portions can be, in particular symmetrically, adjusted by pivoting the swivel arm.

It is noted that, generally, locking means may be associated with the width adjustment means to fixate certain positions of the support portions in the width direction. While, for example, latch mechanisms, clamping mechanisms and the like can be employed, also embodiments using brake-like mechanisms are conceivable. In particular regarding preform elements and/or precast elements as items, which may not comprise flanges and/or edge shoulders, the ability to fix the support portions in a current width-adjusted state is advantageous, since inadvertent misalignment of the width adjustment means can be prevented.

Preferably, the support portion may comprise an, in particular flat, contact surface for contacting the item, and a tilting device, in particular a ball joint, for tilting the contact surface into different contact orientations. Items, in particular mold elements, may have differing flange designs or, generally, in particular for building elements, edge designs. Additionally, support portions may be used where the item generally has a surface which is tilted out of the horizontal plane. In all those cases, preferably, additional degrees of freedom can be provided for the support portion by providing a tilting device allowing tilting of the contact surface out of the horizontal plane to adjust to the orientation of the item where it is to be engaged. For example, the flange of a mold element or building element may comprise an oblique mold surface, which may be bounded by an edge shoulder. In such an embodiment, the support portion, in particular the contact surface, may be placed adjacent to the edge shoulder in an orientation corresponding to the oblique mold surface. However, if locking means are associated with the width adjustment means, such an edge should may not be necessary. Preferably, the tilting device may comprise a ball joint to, in particular, allow tilting/pivoting around a rotation axis extending in the longitudinal direction independently of the pivot angle of the swivel arm.

Regarding the shape adjustment means, preferably, it may comprise a flexibility and/or elasticity of the, in particular sagging, respective support portions. In particular, the support elements may comprise lateral mounting components, which may be mounted, for example, to opposing vertical beams of the frame structure at a respective longitudinal position. Between these mounting components, coupled to them, the support portion may span, in particular saggingly, the distance in width direction between the mounting components. Since the support portion is flexible and/or elastic, it can conform to the shape of a supported item by respective deformation. While, in embodiments, the support portions may comprise a strap, preferably, the support portions may comprise a carrying wire and/or an, in particular rotatingly mounted, at least essentially cylindric support pillow. In advantageous embodiments, rollers may be mounted on the carrying wire, facilitating to pull items over the carrying wire and, hence, the rollers. In a like manner, the support pillow may be mounted rotatably around its central axis and hence also "roll", facilitating the movement of items on the support portions. Generally, a carrying wire and a support pillow provide the additional advantage of not producing wrinkles in fiber material of the item and/or changing the geometry.

Other elements having these properties, for example straps, can, of course, also be used.

In preferred embodiments, the support portion may be coupled to at least one lateral mounting component of the support element by a resiliently length-adjustable element, in particular a spring. Such a resiliently length-adjustable element, in particular a spring, further improves the adjustability to the individual items to be supported. In particular, if the mounting components are individually height adjustable for each lateral side, the resiliently length-adjustable element may compensate at least partly for such a height difference, preventing loss of adjustability to the shape of the item.

As already indicated, the rack may further comprise height adjustment means for the support elements, wherein the height adjustment means are configured such that each support element and/or each lateral end, in particular mounting component, of each laterally opposingly mounted support element is individually height-adjustable and/or the support elements of each support assembly are collectively height-adjustable.

Regarding the collective height-adjustability, a sort of "elevator" function can be provided. As already discussed, each support assembly may define a transport and/or storage space for an item. If, now, all support elements of a support assembly are collectively height-adjustable, this space and also a supported item can easily be moved to another height position, for example a transport and/or storage height position. This is particularly advantageous if a certain optimal loading and/or unloading height for the support elements and hence the support portions exists. If, for example, this optimal loading and/or unloading height position is in the lower half of the frame structure, items can be "elevated" into higher transport and/or storage positions, making room for a new item to be loaded onto another, lower support assembly.

In an example, if a rack having four support assemblies is empty, i.e. has no items loaded, the uppermost or lowermost support assembly, that is, its support elements, may be collectively moved to the optimal loading height position. Here, an item can be loaded. After loading, the uppermost support assembly would be raised to an, in particular uppermost, transport and/or storage height position, freeing the space below for further loading activities. For example, the next lowest support assembly's support elements may now be positioned in the optimal height position for loading, the next item can be received and also moved upwards to a transport and/or storage height position adjacent to the first item loaded. Again, the space around the optimal loading and/or unloading height position is freed. For the case in which the lowermost support assembly is loaded first, the transport and/or storage height position may be at the bottom of the frame structure, respectively. Of course, before loading, if provided, width adjustment means can already be used to adjust for the item to be loaded. Furthermore, if individual height adjustment is possible for the support elements, as further discussed below, also a height adjustment may be performed before loading. On the other hand, to unload items, the support elements of the corresponding support assembly may be collectively moved to the optimal unloading height position, which may be different from the optimal loading height position, where the item can be unloaded. If required, other items stored can be moved past this optimal height position. Hence, by being able to collectively height-adjust, in particular by controlling the height adjustment means, the support elements of each support assembly, improved handling during loading and unloading can be provided, facilitating the respective processes.

On the other hand, also individual height-adjustability by height adjustment means has its advantages. For example, there may be a global or local height difference between opposing lateral edge regions of items to be supported, which can be accounted for by, locally along the longitudinal direction or globally along the longitudinal direction, choosing different heights of the support elements and hence support portions. Regarding mold elements or preform elements, for example, the height along the longitudinal direction may vary due to special design features, which may, for example, be provided for lightning protection systems and the like. If, for example, the flange of a mold element is locally higher than along the rest of the length, a corresponding support portion on a support element may be adjusted to this larger height. Accordingly, adjustments may be performed for locally or globally larger or smaller heights.

Generally, the height adjustment means may comprise at least one controllable actuator to effect a height adjustment. In this context, the rack may also comprise operation elements, for example located at the frame structure and/or, in particular regarding commonly adjusting the height of support elements of a support assembly, as at least one remote control device. Of course, other adjustment means, if suitable, may also comprise actuators which may be controllable. Certain control processes may also be automated, for example by controlling actuators using a control device.

In concrete embodiments, the height adjustment means may comprise a rail provided in or as a section of a vertical beam of the frame structure, in particular for exactly one support element of each support assembly, respectively. For example, the vertical beams can be hollow and provide an opening as a rail, wherein, for example, part of a carriage, in particular comprising at least a part of the actuator, may be placed inside the vertical beam. In other embodiments, mounting components of support elements for all embodiments may comprise a clamp at least partly encompassing the vertical rail, which may be fixed by, for example, fixating means and/or also comprise an actuator, in particular interacting with a respective configuration of the vertical beam, for example a toothed rod. Several embodiments in principle known from the state of the art can also be employed here to allow, in particular individual, height adjustment of support elements, in particular mounting components of support elements.

In preferred embodiments, each support portion comprises a low friction material and/or rollers in a contact area to the item. Having a low friction material, for example on the already mentioned contact surface, allows easy loading or unloading of items. For example, an item may be slid upon or slid from the support portions of a support assembly in the longitudinal direction, preferably, as already mentioned, in an optimal height location. Rollers, which may preferably be adjustable in their rolling direction if swivel arms are used, allow to achieve similar advantages and handling options. In particular, if a carrying wire is used as a support portion, multiple rollers may be mounted to it along its length, in particular in regular distances. Cylindrical and/or ball-shaped rollers may be used. In the latter case, a carrying wire with rollers mounted thereon may be compared to a pearl necklace. Other configurations of an, in particular sagging, support portion being mounted to the frame structure at both lateral sides may also be supplied with rollers, like, for example, rope or rope-like support portion. In particular, the rotatable, cylindric support pillow mentioned above may also be understood as a roller.

Preferably, the frame structure may be supported on wheels. Wheels are a well-known device to facilitate and simplify relocation of the rack, in particular regarding transport purposes and/or relocation in a storage. If the rack is supposed to be used under extreme environmental circumstances, for example for placing items in a heating and/or cooling device, in particular an oven, the wheels may preferably be resistant regarding the respective influences to the degree exerted. Generally speaking, a locking device may be associated with the wheels, for example a releasable brake, to allow fixation of a current location of the rack, for example for loading and/or unloading and/or processing/treatment of items in a manufacturing process step. For example, the rack may be placed at a work station, for example a packing station/preform mold or precast mold, and its position may be fixated. Items may be loaded. When at least one item is loaded, in particular when all support assemblies support an item, the locking device may be released and the rack may be transported to a further work station, for example an oven, wherein the rack with the items, for example preform elements and/or precast elements, may be placed and the locking devices may be engaged to fixate the position during application of the manufacturing process step, in particular heat treatment and/or cold treatment. In the same manner, after again releasing the locking device, the rack may be moved to optional other work stations, for example an unpacking station, and, finally, to a blade mold where preform elements and/or precast elements as items may be unloaded and used to manufacture a wind turbine blade.

In embodiments, the frame structure may comprise a U-shaped cross section, which is open to the ground. This allows the frame structure and, consequently, the rack to be moved over a work station such that items can be "dropped off" for unloading or lifted off the work station for loading. In particular, in an embodiment where pairs of support portions are mounted to laterally opposing sides of the frame structure via support elements, in particular swivel arms, the rack may be moved over the work station on which an item to be loaded is supported, wherein the width adjustment means may be applied such that the support portions pass along beside the item. For example, swivel arms may be in an outermost pivoting position. Using height adjustment means, the support elements of a respective support assembly may be lowered such that the support portions are positioned below the lateral edge regions, in particular flanges, of the item to be loaded in the height direction. Then, width adjustment means may be applied to place the support portions below contact surfaces of the item to be contacted, and the height adjustment means may again be applied to lift the item from the work station to load it. Analogous steps can be undertaken to unload an item onto the work station. Such handling is in particular advantageous for mold elements as items to be placed on or removed from mold element support devices. It is, however, noted that such an embodiment, generally, can also be realized if support portions spanning from one lateral side of the frame structure to the other lateral side of the frame structure are provided, in particular, if these support portions are releasably attached to mounting components and/or the work station comprises a self-supporting part. Furthermore, generally, also combined embodiments are conceivable where the rack as well as the work station can be partially overlapped in the longitudinal direction to place at least one support portion below the item to be loaded or unloaded, bring it into contact with the item and then slide the item onto the whole support assembly. Like steps may be performed for unloading.

In embodiments, the rack, in particular when transporting and/or storing preform elements in a vacuum bag, may also comprise at least one vacuum supply for actively providing vacuum to at least one supported item. For example, the vacuum device may comprise at least one vacuum pump. In the exemplary event that a preform element in a vacuum bag needs an active vacuum in order not to lose the vacuum during transport, the vacuum device can be used. The vacuum device may preferably be positioned where it is not in the way of handling the items, for example at an outer side of the frame structure.

Preferably, the rack may comprise several rack modules releasably connectible in a longitudinal direction by connection means. In this manner, the rack may be adjusted in the longitudinal direction due to a modular construction. For example, if longer items are to be supported, rack modules can be added. If shorter items are to be supported, rack modules can be removed. This further increases the flexibility and adaptability of the rack. For example, the connection means may comprise vertically oriented connection plates, in particular flange-like connection plates, which can be attached to each other, for example by screws, and/or prolonging beam elements.

Further preferably, the rack may comprise a cover for covering the frame structure, in particular with items supported therein. Such a cover may, for example, be a canvas and/or a tarpaulin, but may also take other forms. It is preferably provided in a textile and/or generally flexible form such that it can be easily installed. The cover advantageously protects the rack and, particularly, items supported therein from adverse environmental influences, for example in a storage and/or during transport in a manufacturing system.

In a manufacturing system for preform elements and/or precast elements, in particular for a wind turbine blade, at least one work station and at least one rack according to the invention are provided. In such a context, the rack may be used as a transport and/or storage device, for example for transporting items from one work station to another work station and/or storage and/or to support items in a storage. In particular, embodiments are conceivable where the rack can be applied to multiple types of items, for example to mold elements as well as building elements, that is, preform elements and/or precast elements. Due to the flexibility regarding widths and/or shape, items of different size and/or shape can be supported by the support assemblies of the rack. Since the items are already horizontally stored, easy loading and/or unloading processes, which do not require any rotation of the items, can be implemented, in particular if, by using height adjustment means, the support assemblies can be adjusted to an optimal loading and/or unloading height location. Generally, the manufacturing system and the rack can be used for manufacturing wind turbine blades of a variety of different sizes and dimensions.

In embodiments, the manufacturing system may further comprise at least one loading and/or unloading assistance device further facilitating loading and/or unloading processes to and/or from the rack. Such an assistance device may, for example, comprise a gantry crane or an overhang crane comprising at least one gripper to grip an item on the side to which it is to be unloaded. If the gripper is moved in the longitudinal direction, the item can be pulled out of the rack slidingly, for example such that it slides onto or above a new position, for example at a work station, where it can be supported. For example, a mold element may be unloaded onto a mold element support device to form a preform mold or precast mold as a work station, in particular a packing station for preform elements. In a like manner, preform elements and/or precast elements can be unloaded onto manufacturing process surfaces or support devices, for example at an unpacking station where a vacuum bag or vacuum foil is removed. Before loading an item into the rack, the crane or generally assistance device may also push the item slidingly onto the support portions of a respective support assembly.

Other loading and/or unloading assistance devices may also be provided, for example lifting devices, in particular if an item cannot be directly slid out from an optimal loading and/or unloading height position. Here, principally known assistance devices for handling item, in particular building elements, during manufacture of a wind turbine blade may be employed, for example vacuum lifters and the like.

Generally speaking, the manufacturing system may also comprise one or more work stations. One of these work stations may comprise a manufacturing assembly providing a preform mold or precast mold. At the location of the work station, a mold element support device may be provided, which may preferably be adjustable to different shapes and/or sizes of mold elements, which can be transported and/or stored as items in a rack according to the invention and may be provided in different shapes and/or sizes. For example, in a simple, easily implementable and operable embodiment, such a mold element support device for a manufacturing assembly for preform elements and/or precast elements, in particular for a wind turbine blade, may comprise multiple vertical column elements which comprise an upper support portion for carrying a longitudinal mold element, in particular a mold shell, for manufacturing a preform element and/or precast element. As a first feature, the column elements of this embodiment comprise a height adjustment device to, in particular individually, adjust the height of the column elements. As a second feature, the support portions are distance-adjustable at least in a width direction of the mold element via a positioning device. The first feature and the second feature allow to adapt the mold element support device to differently shaped and/or sized mold elements.

Further work stations of the manufacturing system may comprise a heating and/or cooling device, in particular an oven, an unpacking station and also the blade mold station, where wind turbine blades are manufactured, in particular using preform elements and/or precast elements unloaded from a rack according to the invention. The manufacturing system may also comprise a storage area, in particular also storage areas for different items. For example, if a mold element support device of the manufacturing system is movable, for example on wheels, a central exchange station where different mold elements are stored, in particular in racks according to the current invention, may be used, where mold elements are stored and can be interchanged.

Finally, this disclosure also relates to a winch assistance device as an example for a loading and/or unloading assistance device. A winch assistance device for loading and/or unloading items to or from a rack according to the invention may comprise:
- mounting means for releasably mounting the winch assistance device to a component at a destination location for the item,
- a winch assembly attached to the mounting means comprising a towing cable attached to a wheel of the winch assembly at one end, and
- a coupling means for coupling to the item at the other end of the towing cable.

Such a winch assistance device can be flexibly used for loading and/or unloading items to or from a rack according to the invention. For example, to load an item, the winch assistance device may be mounted to the rack, in particular to the frame structure, at a location longitudinally opposite to the current location of the item to be loaded. The towing cable can be drawn, in particular over the support portions of a respective support assembly, to the near end of the item regarding the rack and can be coupled to the item via the coupling means. A manual or electric actuator for turning the reel can then be actuated to pull the item longitudinally into the frame structure, in particular slidingly on the support portions of the respective support assembly, as already explained. For unloading, on the other hand, the winch assistance device may be mounted to a component, for example a work station component, of the destination location. After coupling to the item, the item can be, in particular slidingly, pulled out from the support assembly onto a new supporting device or surface.

In an embodiment, the coupling means may comprise a plate-like, in particular flexible and/or tensile, coupling element and a coupling pin. The coupling element comprises a through hole for the pin. The item can be coupled to the towing cable by the coupling element by introducing the coupling pin through the trough hole and a through hole, or handling hole, respectively, provided in an edge region of the item. The coupling pin can be held in this position by a locking means to finalize the coupling process. This is, in particular, advantageous with regard to preform elements and/or precast elements as items, since vacuum bags have been proposed for such items which already comprise through holes/handling holes along an outer rim or edge of the vacuum bag. This is, for example, described in post-published European patent application EP 21209596.2.

Further preferably, the winch assistance device may also comprise a width adjusting device to further facilitate mounting to different components and/or different mounting locations. For example, the winch assembly may comprise two lateral bearing elements comprising bearings for a shaft, to which the reel with the towing cable may be mounted. The shaft may be telescoping to implement the width adjusting device of the winch assistance device. To at least one of the bearing elements, an actuator, for example an electrical motor may be mounted. The bearing elements may comprise connection portions to connect to the mounting means, which may, for example, comprise mounting brackets for each lateral side.

In such an advantageous embodiment, but also in other embodiments, the winch assistance device may be modular, such that, for example, the mounting means and the winch assembly with the coupling means may both form at least one module, in particular multiple modules. For example, the shaft may be removable from the bearing elements and the reel may be removed from the shaft. It is generally noted that such a winch assistance device may, of course, also provide multiple instances of the reel and/or the towing cable with coupling means, in particular on a common shaft. In a modular construction, the number of towing cables actually used for loading and/or unloading may be chosen individually for each loading and/or unloading process.

In embodiments, the winch assistance device may also be used for additional purposes in the manufacturing system according to the invention, for example for pulling components of preform elements, like fiber mats, onto a molding surface of a mold element and the like.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a workstation in a manufacturing system,
- Fig. 2: a first embodiment of a rack used as a transport and/or storage device in the manufacturing system,
- Fig. 3: a cross-sectional view of the first embodiment in a first loading state,
- Fig. 4: a cross-sectional view of the first embodiment in a second loading state,
- Fig. 5: an exploded view of a support element,
- Fig. 6: a possible design of a support portion,
- Fig. 7-9: a support portion interacting with different flange designs of an item,
- Fig. 10: an example of an unloading process using an assistance device,
- Fig. 11: a second example of an unloading process using a modified second embodiment of a rack,
- Fig. 12: a cross-sectional view of a third embodiment of a rack,
- Fig. 13: a close-up view of a lateral side end of a support element,
- Fig. 14: a first alternative embodiment of a support portion,
- Fig. 15: a second alternative embodiment of a support portion,
- Fig. 16: a loading process of the third embodiment of the rack using a winch assistance device,
- Fig. 17: the situation of Fig. 16 from another point of view,
- Fig. 18: the winch assistance device,
- Fig. 19: a close-up view of a coupling means of the winch assistance device,
- Fig. 20: the use of the winch assistance device for unloading an item,
- Fig. 21: the third embodiment of the rack at another workstation,

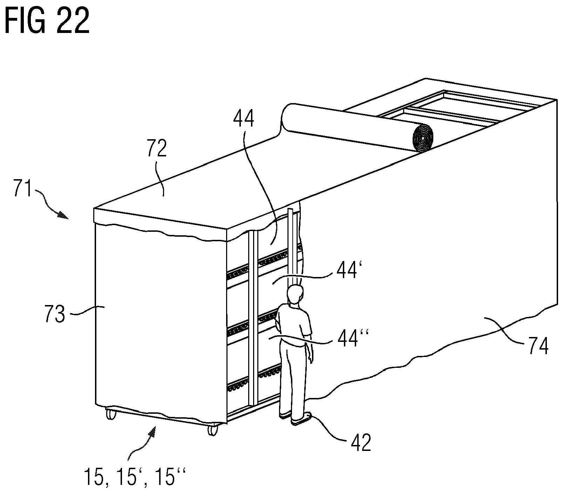

- Fig. 22: a cover applied to the rack,
- Fig. 23: a modular construction of the rack.

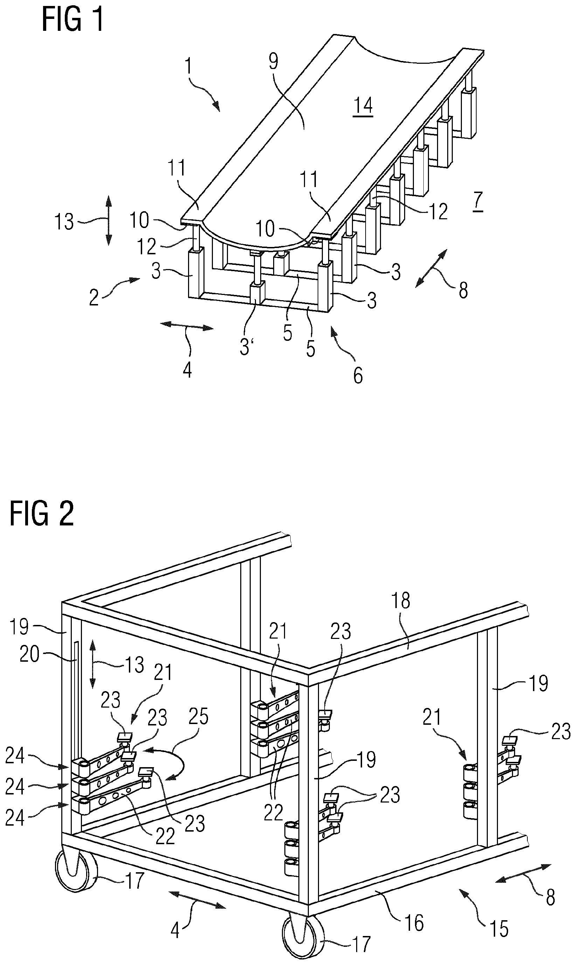

In the following, embodiments of a rack according to the invention will be discussed in context with a manufacturing system according to the invention, in which preform elements for a wind turbine blade can be manufactured in different sizes and/or shapes. To better define the context of the following disclosure of non-limiting embodiments, fig. 1 first shows a work station 1 in the manufacturing system. The work station 1 is a manufacturing assembly comprising a preform mold and can also be called packing station.

The preform mold comprises a mold element support device 2 having a plurality of column elements 3, 3', which are movable in a width direction 4 by being guided in rails 5 as part of a positioning device 6. The rails 5 may be mounted or, in other embodiments, be integrated into a floor 7 on which the mold element support device 2 is placed.

In the embodiment shown, a pair of opposing column elements 3 is guided in a shared rail 5, but each of the column elements 3 is independently positionable in the width direction 4. In a longitudinal direction 8, a plurality of such pairs in shared rails are consecutively placed such that a mold element 9 of the preform mold can be supported on support portions 10 of the column elements 3, as shown in fig. 1 for a mold element 9 having a large width, such that the column elements 3 are positioned exemplarily at the outermost positions of the shared rail 5 in width direction 4 to support flanges 11 of the mold element 9. The column elements 3 further comprise a height adjustment device 12, in this case a telescopic device, to be individually adjusted in a height direction 13.

To manufacture a preform element, the components of the preform element, for example comprising fiber mats, core materials and/or binding agents, are placed in the mold element 9 having a molding surface 14 defining a shape desired for the preform element. By placing the components on the molding surface 14, they assume the desired shape. The binding agent is supplied to locally attach the components together such that they can be handled as a single item, that is, the preform element. As will be further discussed later on, the binding agent may be activated by heat and hardened/cured by cooling, which can also already take place at the work station 1. Alternatively, an oven may be used. In many embodiments, the preform elements will be packed in a vacuum bag and/or vacuum foil for improved handling.

Due to the adjustability of the support portions 10 in height direction 13 and in width direction 4, enabled by the positioning device 6 and the height adjustment devices 12, the mold element support device 2 may be flexibly used for different shapes and/or sizes of mold elements 9, for example narrower mold elements 9, for which the outer column elements 3 are moved inwards on the rails 5, and the like. Mold elements 9 may also have characteristic features, for example with respect to a lightning protection system of the wind turbine blade to be manufactured from the preform elements. In the region of such a feature, the mold element 9 may be locally wider and/or opposing flanges 11 may have locally different heights. The positioning device 6 and the height adjustment devices 12 also allow adjustment for this kind of mold elements 9. By adding or removing column elements 3 in the longitudinal direction 8, a length adjustment is also possible.

Fig. 1 also shows an optional additional feature of such a mold element support device 2, mainly an additional column element 3' being located between the column elements 3 supporting the flanges to additionally support a middle section of the mold element 9. This additionally prevents deflection and/or deformation of the mold element 9. The additional column element 3' is also movable in or on the rail 5 to be positioned at the lowest point of the mold element 9 at the respective longitudinal position.

Of course, other embodiments of such mold element support devices 2 are conceivable. In a manufacturing system having such a work station 1, not only preform elements are items that have to be transported between different work stations 1 or stored, but additionally, mold elements 9 have to be transported and/or stored as further items. To facilitate transport and/or storage of such items, the manufacturing system comprises at least one rack according to the invention.

Fig. 2 shows a first embodiment of such a rack 15 in a partial view. The rack 15 comprises a frame structure 16 supported on wheels 17, such that the rack 15 may be used to transport items. The wheels 17 have locking devices, for example brakes, associated with them.

The frame structure 16 comprises horizontal beams 18 as well as vertical beams 19. In inner rails 20 of the vertical beams 19, support elements 21 are guided and, hence, height-adjustable, wherein an actuator (not shown) is provided to automate movement of support elements 21 in the rails 20, for example by moving a carriage of the support elements 21 guided in the rails 20 up and/or down in the height direction 13 to implement a height adjustment means.

As can be seen in fig. 2, three support elements 21 are guided in each vertical beam 19, such that three pairs of laterally opposingly mounted support elements 21 are provided. Each support element 21 comprises a pivotable swivel arm 22 mounted to the vertical beam 19 at one end and carrying a support portion 23 on the other end. Items to be transported and/or stored can be supported on these support portions 23.

The lowermost group of support elements 21 form a first support assembly 24, the middle support elements 21 a second support assembly 24 and the uppermost support elements 21 form a third support assembly 24. On the support portions 23 of each support assembly 24, an item may be supported, in the embodiments discussed here a preform element and/or a mold element 9.

As indicated by arrow 25, the swivel arms 22 of the support elements 21 are pivotable, such that the support portions 23 can be placed at different positions in the width direction 4. Combined with individual height-adjustability of the support elements 21 of each support assembly 24, items of varying size, in particular width, and/or shape, may be supported in horizontal orientation, i.e. the same orientation in which they are used in the manufacturing process, such that, during loading and/or unloading, rotation of the item is not required. The horizontal manufacturing process orientation of the mold element 9 can already be seen in fig. 1; as the preform elements are manufactured/packed on the molding surface 14, obviously, their manufacturing process position is also a horizontal position.

In addition to being individually height-adjustable, the support elements 21 of each support assembly 24 are also collectively height-adjustable, that is, can all be moved together in the height direction 13. This allows a kind of "elevator function", such that, for example for loading and/or unloading, the support elements 21 of the respective support assembly 24 to be loaded/unloaded can be height-adjusted into an optimal loading and/or unloading height position, facilitating loading and unloading. After an item has been loaded, that is, is supported on the support portions 23 of the support elements 21, the respective support assembly 24 can be height-adjusted collectively to a transport and/or storage height position, freeing the space at the optimal loading and/or unloading height.

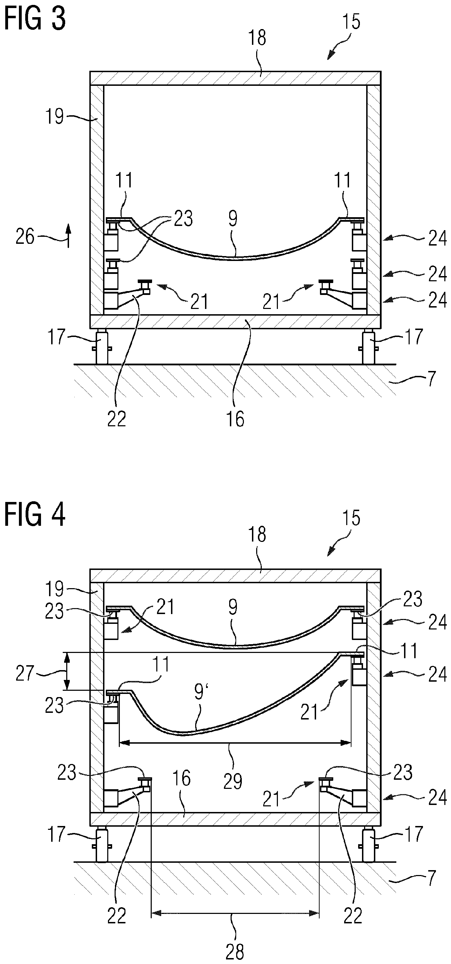

The cross-sectional view of fig. 3 exemplarily shows that a mold element 9 as an item is supported on the support portions 23 of the uppermost support assembly 24, which is still in the optimal loading height position. As indicated by arrow 26, it may now be moved upwards into a transport and/or storage height position, as shown in the state of fig. 4. Here, another mold element 9' having a different shape in width direction 4 is supported by the support portions 23 of the middle support assembly 24. The mold element 9' may have the same width, but there is a height difference 27 between its lateral edge regions, in this case also flanges 11. The rack 15 may be flexibly adjusted to such height differences by the height adjustment means configured to individually height-adjust the support elements 21 of a support assembly 24 and hence their support portions 23.

However, as shown for the lowest support assembly 24, the support elements 21, by means of their swivel arms 22, as a width adjustment means, can also be adjusted in the width direction 4 to account for different widths of items to be supported. By pivoting the swivel arms 22 inwards, the support portions 23 are located closer to each other, such that different distances 28, 29 result for the lowest and the middle support assemblies 24. Here, in particular regarding preform elements, which may not have flanges 11, locking means for fixing a pivot position of the swivel arms 22 can also be provided.

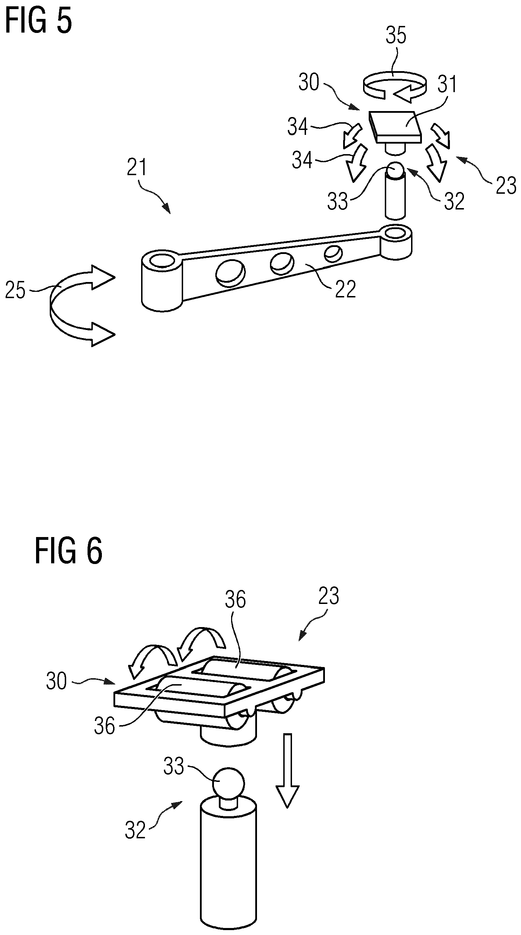

The exploded view of fig. 5 shows components of each support element 21. As can be seen, the support portion 23 comprises a contact area 30, in this case a flat contact surface 31, for contacting an item to be supported. A tilting device 32 is constituted by a ball joint 33, such that can be tilted from its horizontal position into a plurality of tilted orientations, as indicated by the arrows 34. The ball joint 33 or, in general, the tilting device 32, may also allow rotation of the contact area 30/contact surface 31, as indicated by arrow 35. This allows adjustability of the contact surface 31 and hence the whole support portion 23 to different designs of the flanges 11 or generally different configurations of lateral edge regions of items to be supported. The contact area 30, in particular the contact surface 31, may comprise a low friction material, allowing to slide the items during loading and/or unloading.

Fig. 6 shows a further possible design of the contact area 30 of the support portion 23, where, in this case, rollers are provided for better movability of supported items. The rollers 36 are preferably oriented in width direction 4, wherein pivoting of the swivel arm 22 may be compensated by rotation according to arrow 35.

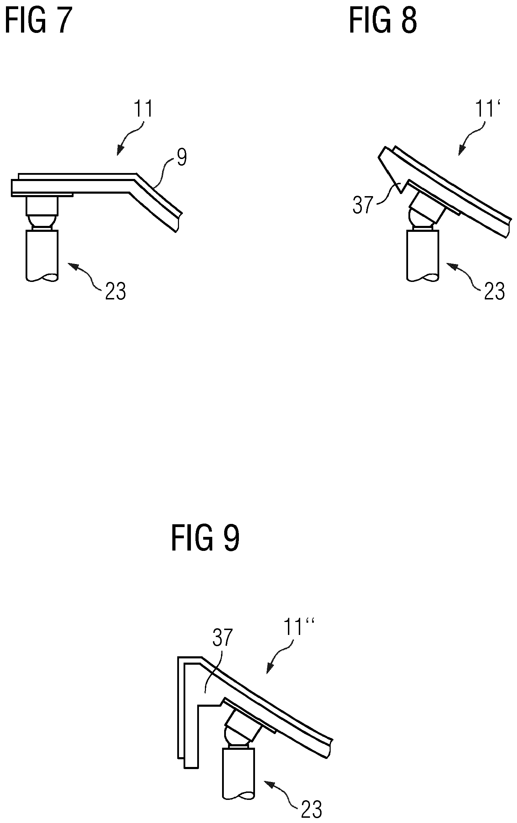

In figures 7 to 9, adjustment to different configurations of flanges 11, 11' and 11'' is shown, which each require tilting of the contact surface 31 by the tilting device 32. In particular, in figures 8 and 9, flanges 11' and 11'' are shown having a shoulder 37 against which the contact area 30 of the support portion 23 may rest. Preform elements may have no such shoulder 37, however, if locking means for the swivel arms 22 are provided, they can also be supported having oblique support surfaces.

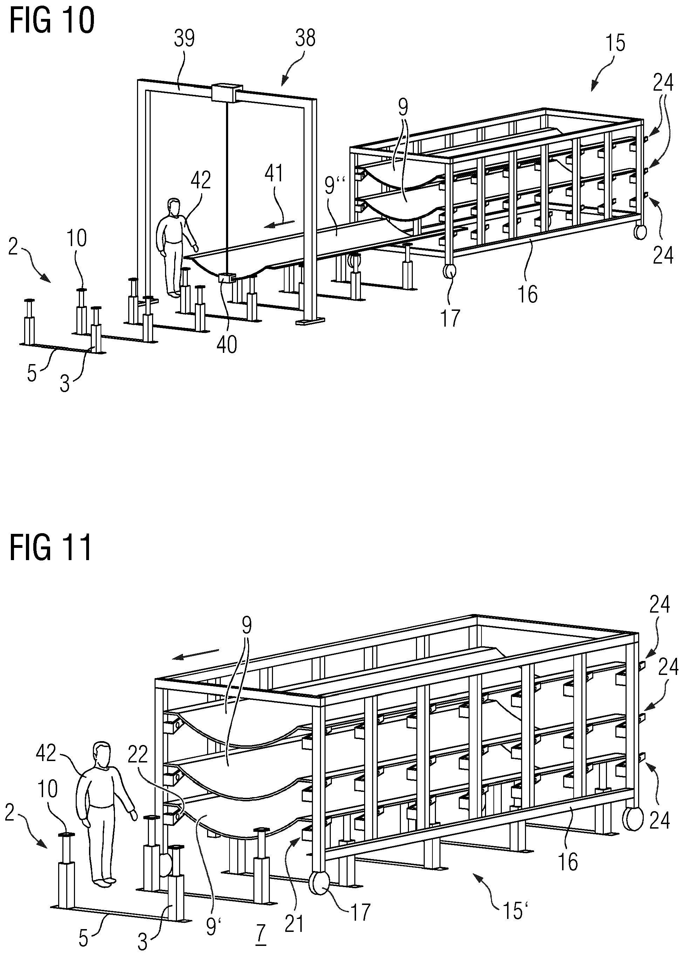

Fig. 10 shows an example for an unloading process in the manufacturing system. Here, the mold element 9 of fig. 1 having the large width has already been removed from the mold element support device 2 and a mold element 9'' is now unloaded from the lowest support assembly 24 of the rack 15. As an assistance device 38, an overhang crane 39 having a gripper 40 and being movable in the longitudinal direction 8 is shown, wherein the near end of the mold element 9" has been gripped by the gripper 40 such that the mold element 9'' can be slidingly pulled from the support portions 23 of the support assembly 24 by moving the overhang crane 39, as indicated by arrow 41. After the mold element 9" has been completely pulled out, it may be lowered onto the support portions 10 of the mold element support device 2.

Fig. 11 shows unloading for a second, slightly modified embodiment of a rack 15', in which the lower horizontal beams 18 in the width direction 4 have been removed, such that the frame structure 16 now has the cross-sectional shape of a U which is open to the ground, i.e. floor 7. In this manner, the rack 15' can be driven over the mold element support device 2 and the mold element 9' can then be lowered onto the support portions 10 of the mold element support device 2 using the height adjustment means as discussed above.

Here, it is noted, a remote control device at least for collectively moving the support elements 21 of the support assemblies 24 can be provided to further facilitate loading and unloading for manufacturing personnel 42.

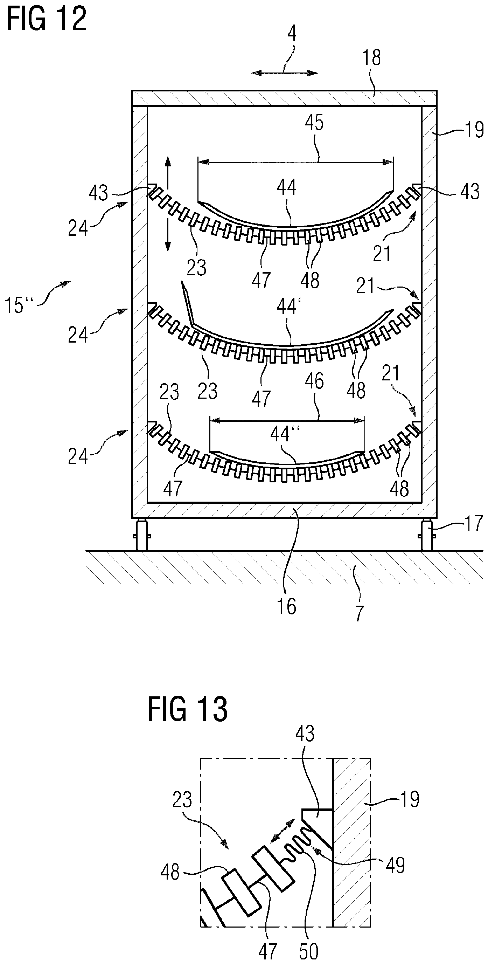

Fig. 12 show a third embodiment of a rack 15" according to the invention in a cross-sectional view. Here, the support elements 21 span the whole width between opposing vertical beams 19 of the frame structure 16 in the width direction 4, wherein a sagging support portion 23 is mounted to mounting components 43 at each lateral side, which, again, are guided in rail 20 by using a carriage, as discussed with regard to the first and second embodiments. Also in this third embodiment, the mounting components 43 of support elements 21 of each support assembly 24 can either be height-adjusted collectively or individually.

The support portion 23 spanning between the mounting components 43 is flexible to adjust to different shapes and/or sizes, in this case width, of items 44, 44', 44'' to be supported, as indicated in fig. 12 also for differing widths 45, 46. The items 44, 44', 44" may be mold elements 9 or preform elements.

In fig. 12, the support portions 23 each comprise a carrying wire 47 onto which rollers 48 are rotatably mounted to facilitate sliding of items 44, 44', 44'' on the support portions 23.

As shown in fig. 13, the support portions 23, that is, the carrying wires 47 with the rollers 48 mounted thereon, can be attached to the mounting component 43 at at least one side via a resiliently length-adjustable element 49, in this case a spring 50. The spring 50 improves adaptability to different items 44, 44', 44'' and helps compensate height differences of the mounting components 43 of a support element 21.

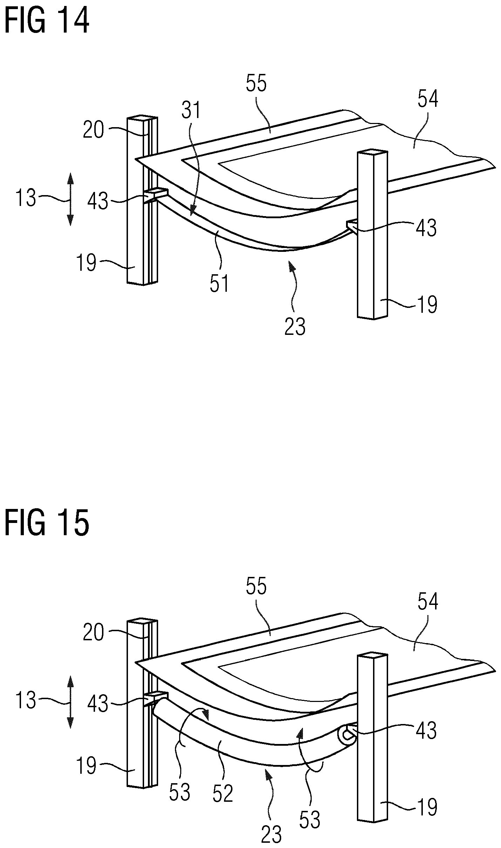

Figures 14 and 15 show possible further choices for support portions 23 of the third embodiment, namely, according to fig. 14, a strap 51 having a low friction material on its contact surface 31 and, in fig. 15, a rotatable pillow 52, as indicated by arrows 53. Here, the rotatability of the support pillow 52, which is cylindric, allows good movability of items 44, 44', 44" on the support portions 23. In figures 14 and 15, as items 44, 44', 44", preform elements 54 packed in vacuum bags 55 are exemplarily shown.

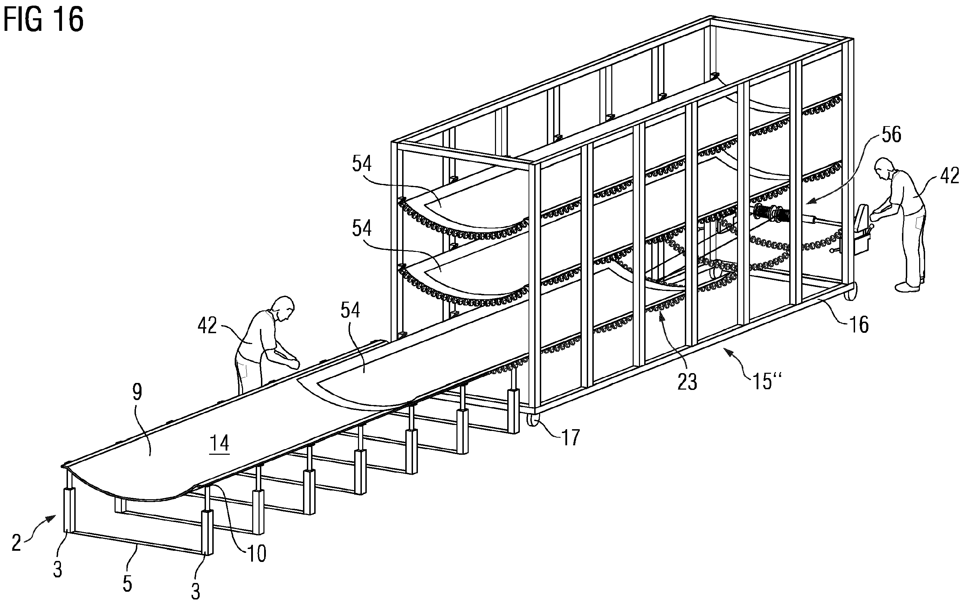

Fig. 16 shows a loading process for the third embodiment of the rack 15'', wherein a preform element 54 is loaded from the molding surface 14 of a mold element 9 onto the lowermost support assembly 24 of the rack 15" . Here, a winch assistance device 56 has been mounted to the far longitudinal end of the rack 15'', in particular to the frame structure 16, which has been coupled to the near end of the preform element 54 such that it can be pulled from the molding surface 14 into the frame structure 16 onto the support portions 23 of the lowest support assembly 24, which is facilitated by the rollers 48.

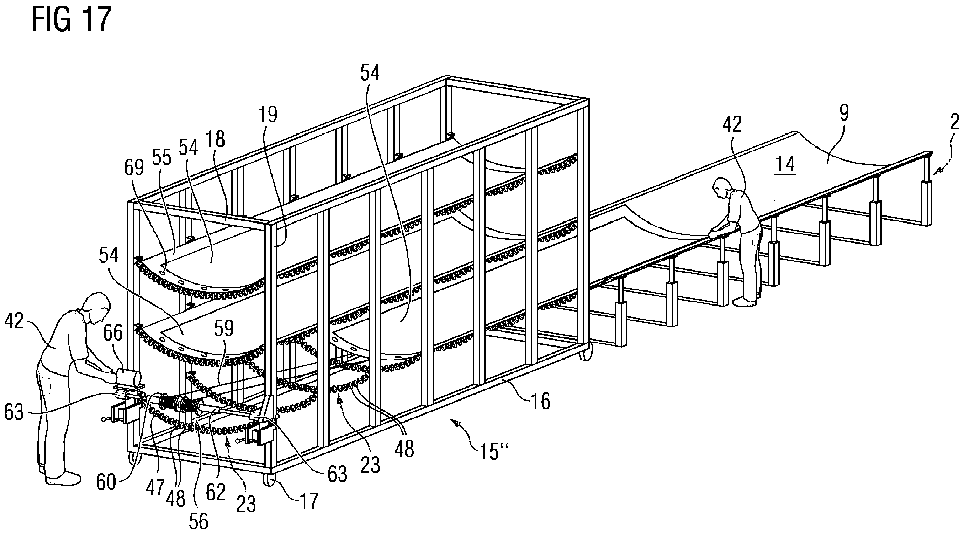

Fig. 17 shows the situation of fig. 16 from the far longitudinal side of the rack 15'', where the winch assistance device 56 has been mounted to the frame structure 16.

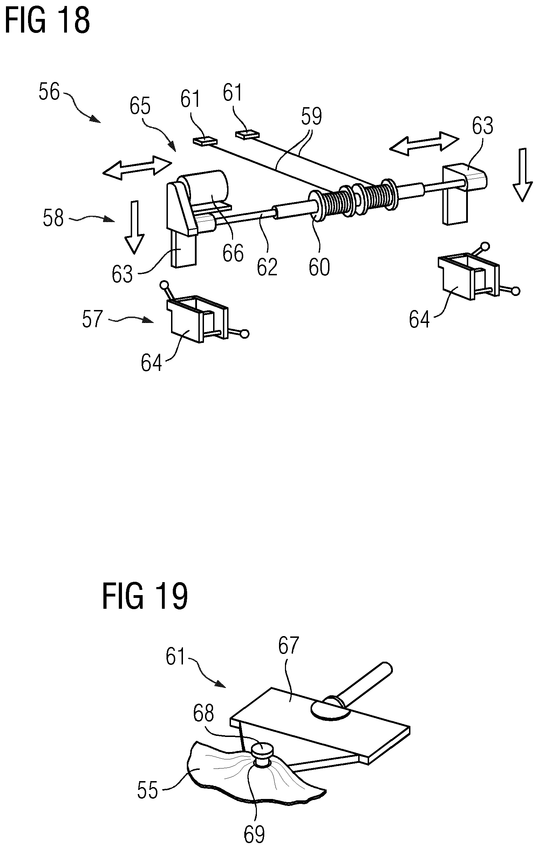

The winch assistance device 56 is an expedient tool explained with regard to fig. 18. As shown in fig. 18, the winch assistance device 56 comprises a mounting means 57 for releasably mounting the winch assistance device 56 to a component in the manufacturing system and a winch assembly 58 with, in this case, two towing cables 59 windable on reels 60, which each have coupling means 61 on their free ends. The reels 60 are mounted to a rotatable, telescoping shaft 62 received in lateral bearing elements 63. The bearing elements 63 comprise connection portions for connecting to the mounting means 57, which, in this case, comprise two mounting brackets 64. An actuator 65, in this case comprising an electric motor 66, for rotating the shaft 62 and hence winding and unwinding the towing cable 59 is mounted to one of the bearing elements 63. By using a telescoping shaft 62, a width adjusting device is provided.

Fig. 19 more closely shows an embodiment of the coupling means 61, in this case comprising a plate-like, tensile and/or flexible coupling element 67, which has a through hole. A coupling pin 68 fits into the through hole as well as into a through hole 69 (handling hole) of the vacuum bag 55 of the preform elements 54.

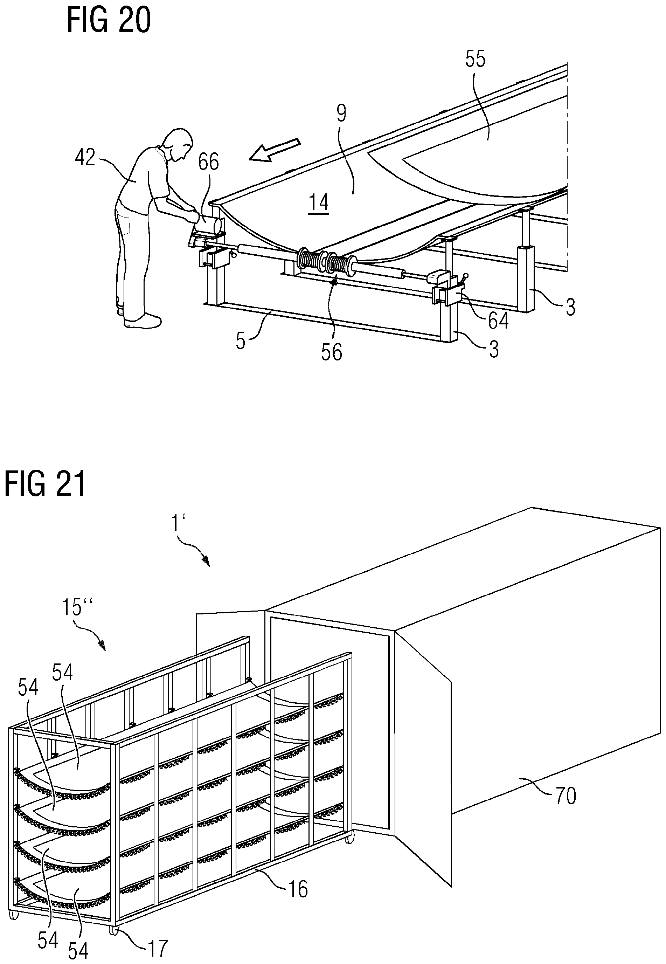

Fig. 20 shows another situation illustrating the flexibility in applying the winch assistance device 56 in the manufacturing system. Here, the winch assistance device 56 has been mounted to column elements 3 of a mold element support device 2 using the brackets 64 and is used to pull a vacuum bag 55 or vacuum foil onto the mold element 9. Of course, other components of the preform element 54 to be manufactured, for example, fiber mats, can also be pulled onto the molding surface 14 of the mold element 9 in this manner.

Returning to the rack, fig. 21 shows the third embodiment of the rack 15" loaded with preform elements 54 at another work station for heat treatment and/or cold treatment. As can be seen, the rack 15 with the preform elements 54 loaded inside the frame structure 16 can be completely introduced into an oven 70 and, after heat treatment and/or cooling treatment, be easily removed again to transport the preform elements 54 to further work stations.

To protect items 44, 44', 44'' during transport and/or storage, the rack 15, 15', 15'' may additionally comprise a cover 71, in this case comprising multiple cover elements 72, 73, 74 which may all consist of a flexible, for example textile material. In other embodiments, a hard cover may be used.

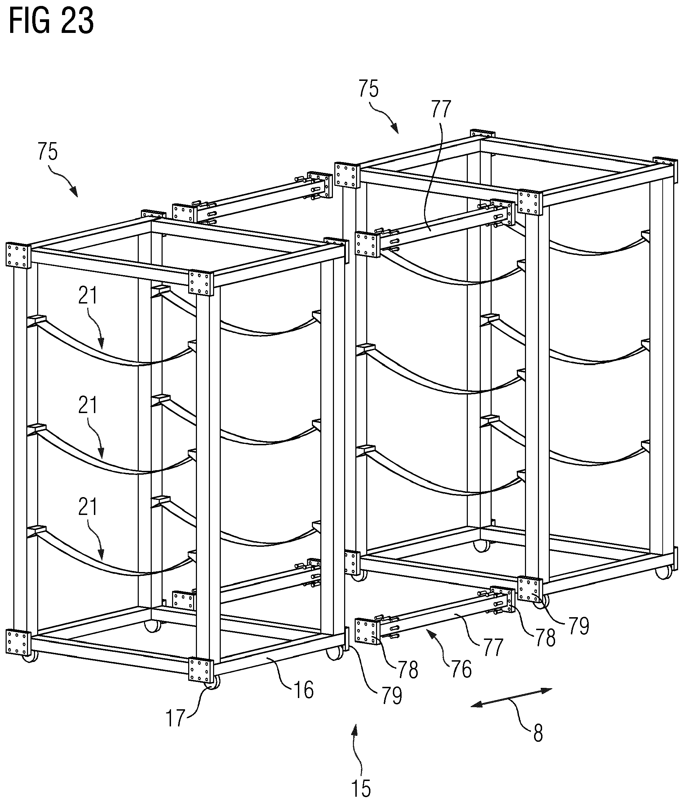

Fig. 23 finally illustrates a modular construction of a rack 15, 15', 15'' such that it can be adjusted in length. Here, the rack 15 comprises several rack modules 75, which are releasably connectable in the longitudinal direction 8 by connection means 76. In this embodiment, the connection means comprise the prolonging beam elements 77 and respective connection plates 78, 79, which allow connection along flanges, for example by using screws and the like.

It is noted that each rack 15, 15', 15'' may also comprise at least one vacuum device (not shown), in particular a vacuum pump, for actively providing vacuum to at least one supported item 44, 44', 44'', in particular a preform element 54.

Although the present invention has been described in detail with reference to the preferred embodiment, the present invention is not limited by the disclosed examples from which the skilled person is able to derive other variations without departing from the scope of the invention.

## Claims

1. Rack (15, 15', 15") as a transport and/or storage device for preform element (54) and/or precast element manufacturing, in particular for a wind turbine blade, the rack (15, 15', 15'') comprising a longitudinal frame structure (16), to which lateral support elements (21) are mounted, which each comprise a support portion (23) and which form multiple support assemblies (24) for multiple longitudinal items (44, 44', 44'') to store and transport horizontally in the frame structure (16), wherein the items (44, 44', 44'') have a horizontal manufacturing process orientation for use in the manufacturing process,
**characterized in that** the support assemblies (24) comprise,
- for support portions (23) of support elements (21) mounted opposingly in width direction (4), width adjustment means for adjusting the distance of support portions (23) of the support assemblies (24) in a width direction to different widths of the items (44, 44', 44"), and/or,
- for support portions (23) spanning the frame structure (16) in the width direction (4) by having their support element (21) mounted to the frame structure (16) at opposing positions in the width direction (4), comprise shape adjustment means for adjusting to different height profiles of supported items (44, 44', 44'') in the width direction (4).

2. Rack according to claim 1, **characterized in that** each support element (21) comprises, as part of the width adjustment means, a swivel arm (22) extending horizontally from the frame structure (16), in particular a vertical beam (19) of the frame structure (16), which is pivotally mounted to the frame structure (16) at one end and carries the support portion (23) at its other end.

3. Rack according to claim 1 or 2, **characterized in that** at least one of the support portions (23) comprises a, in particular flat, contact surface (31) for contacting the item (44, 44', 44'') and a tilting device (32), in particular a ball joint (33), for tilting the contact surface (31) into different contact orientations.

4. Rack according to one of the preceding claims, **characterized in that** the shape adjustment means comprises a flexibility and/or elasticity of the, in particular sagging, respective support portions (23).

5. Rack according to claim 4, **characterized in that** the support portion (23) comprises a carrying wire (47) and/or an, in particular rotatingly mounted, at least essentially cylindric support pillow (52).

6. Rack according to claim 4 or 5, **characterized in that** the support portion (23) is coupled to at least one lateral mounting component (43) of the support element (23) by a resiliently length adjustable element (49), in particular a spring (50).

7. Rack according to one of the preceding claims, **characterized in that** it further comprises height adjustment means for the support elements (21), wherein the height adjustment means are configured such that each support element (21) and/or each lateral end, in particular mounting component (43), of each laterally opposingly mounted support element (21) is individually height adjustable and/or the support elements (21) of each support assembly (24) are collectively height adjustable.

8. Rack according to claim 7, **characterized in that** the height adjustment means comprise at least one controllable actuator to effect a height adjustment.

9. Rack according to claim 7 or 8, **characterized in that** the height adjustment means comprise a rail (20) provided in or as a section of a vertical beam (19) of the frame structure (16), in particular for exactly one support element (21) of each support assembly (24), respectively.

10. Rack according to one of the preceding claims, **characterized in that** each support portion (23) comprises a low friction material and/or rollers (36) in a contact area (30) to the item (44, 44', 44'').

11. Rack according to one of the preceding claims, **characterized in that** the frame structure (16) is supported on wheels (17) and/or comprises a U-shaped cross section, which is open to the ground.

12. Rack according to one of the preceding claims, **characterized in that** the rack (15, 15', 15") comprises several rack modules (75) releasably connectable in the longitudinal direction (8) by connection means (76).

13. Rack according to one of the preceding claims, **characterized in that** the items (44, 44', 44") are chosen from the group comprising mold elements (9, 9', 9"), preform elements (54) and precast elements.

14. Manufacturing system for preform elements and/or precast elements, comprising at least one work station (1) and at least one rack (15, 15', 15") according to one of the preceding claims.

15. Winch assistance device (56) for loading and/or unloading items (44, 44', 44") to or from a rack (15, 15', 15") according to one of the claims 1 to 13, comprising
- mounting means (57) for releasably mounting the winch assistance device (56) to a component an at destination location for the item (44, 44', 44"),
- a winch assembly (58) attached to the mounting means (57) comprising a towing cable (59) attached to a reel (60) of the winch assembly (58) at one end, and
- a coupling means (61) for coupling to the item (44, 44', 44") at the other end of the towing cable (59).
